Europäisches Patentamt

European Patent Office

Office européen des brevets

(19)

(11) Veröffentlichungsnummer: **0 092 800**
**A1**

(12) **EUROPÄISCHE PATENTANMELDUNG**

(21) Anmeldenummer: 83103886.4

(22) Anmeldetag: 20.04.83

(51) Int. Cl.³: **A 01 C 5/04**
**E 04 H 17/26**

(30) Priorität: 20.04.82 DE 3214632

(43) Veröffentlichungstag der Anmeldung:
02.11.83 Patentblatt 83/44

(84) Benannte Vertragsstaaten:
AT BE CH DE FR GB IT LI LU NL

(71) Anmelder: Firma Helmut Werner
Altheimer Strasse 109
D-6660 Zweibrücken 17 Mittelbach(DE)

(72) Erfinder: Werner, Klaus
Altheimer Strasse 109
D-6660 Zweibrücken(DE)

(74) Vertreter: Hansmann, Axel et al,
Patentanwälte HANSMANN & VOGESER
Albert-Rosshaupter-Strasse 65
D-8000 München 70(DE)

(54) Bohrgerät zur Herstellung von Bodenlöchern für Pflanzungen.

(57) Die vorliegende Erfindung schafft ein Bohrgerät zur Herstellung von Bodenlöchern für Pflanzungen oder dgl. mit einem oder mehreren an einem Träger (5) sitzenden, heb- und senkbaren, angetriebenen Bohrwerkzeugen in Form einer drehbaren Spindel (1) o.dgl. mit gegenüber dem Boden einstellbarer Neigungsstellung wobei das Bohrgerät an ein Trägerfahrzeug anbaubar ist. Dabei ist der Träger (5) der Bohrwerkzeuge (1) seitlich parallel zu sich selbst versetzbar und sind die Bohrer (1) mit ihren Antrieben (37) auf dem Träger (5) zur Einstellung unterschiedlicher Lochabstände längsverschieblich angeordnet.

FIG. 1

EP 0 092 800 A1

Croydon Printing Company Ltd.

## Bohrgerät zur Herstellung von Bodenlöchern für Pflanzungen

Die Erfindung betrifft ein Bohrgerät zur Herstellung von Bodenlöchern für Pflanzungen o.dgl. mit einem oder mehreren an einem Träger sitzenden, heb- und senkbaren, angetriebenen Bohrwerkzeugen in Form einer drehbaren Spindel o.dgl. mit gegenüber dem Boden einstellbarer Neigungsstellung, wobei das Bohrgerät an ein Trägerfahrzeug anbaubar ist.

Bei der Anlage von Flächenpflanzungen stellt die Herstellung der Pflanzlöcher besonders in unwegsamem Gelände und Hanglagen ein erhebliches Arbeits- und Kostenproblem dar.

Lange Zeit wurden solche Pflanzlöcher mit der Handhacke hergestellt oder wenn die Böschungen nicht allzu steil waren, mit einem tragbaren Erdbohrgerät mit Benzinmotor und zwei Arbeitskräften. Auf diese Weise konnten jeweils nur einige hundert Pflanzlöcher pro Tag hergestellt werden.

Ein Bohrgerät der eingangs genannten Art ist aus dem DE-GM 75 37 736.5 bekannt geworden. Dieses Bohrgerät wird dabei von dem Ausleger eines Ladekrans getragen. Das Bohrgerät weist dabei drei in fester Beziehung in einer Reihe an einem Träger angeordnete Bohrspindeln auf. Der Träger ist insgesamt an dem Ausleger des Ladekrans gelenkig befestigt. Diese gelenkige Befestigung ermöglicht es, die Bohrrichtung unabhängig von der Winkelstellung des Auslegers des Ladekrans zu wählen.

Dennoch ist jedoch der Anwendungsbereich solcher an einen Ladekran anbaubarer Bohrgeräte begrenzt. Das den Ladekran tragende Fahrzeug benötigt zum Betrieb jeweils eine ebene, feste Standfläche. Zur Erreichung der erforderlichen Kippstabilität muß das Fahrzeug mittels hydraulisch ausfahrbarer Stützen abgesichert werden. Damit beschränkt sich aber auch der Arbeitsbereich des Bohrgerätes jeweils auf den halbkreisförmigen Arbeitsbereich des Auslegers des Ladekrans. Der vorliegenden Erfindung liegt die Aufgabe zugrunde, ein Bohrgerät der in Rede stehenden Art zu schaffen, welches besonders dazu geeignet ist, an einem geländegängigem Trägerfahrzeug auch leichterer Bauart angebracht zu werden, und zwar derart, daß die Pflanzlöcher bei im wesentlichen kontinuierlicher Fortbewegung des Trägerfahrzeugs auf dem Gelände angebracht werden können.

Zur Lösung dieser Aufgabe wird bei einem Bohrgerät der eingangs als bekannt vorausgesetzten Gattung erfindungsgemäß die Anordnung so getroffen, daß der Träger der Bohrwerkzeuge seitlich parallel zu sich selbst versetzbar ist und daß die Bohrer mit ihren Antrieben auf dem Träger zur Einstellung unterschiedlicher Lochabstände längsverschieblich angeordnet sind.

Das Bohrgerät nach der Erfindung läßt sich leicht seitlich an ein Trägerfahrzeug wie ein kleines Raupenkettenfahrzeug anbauen, wobei dann die einzelnen Bohrwerkzeuge nicht nur entsprechend der Neigung des befahrenen Hangs in ihrer Neigungsstellung einstellbar und heb- und senkbar sind, sondern es kann der Fahrer des Fahrzeugs durch die parallele Ein- und Ausfahrbarkeit der Bohreranordnung auch einen vorgeschriebenen Reihenabstand sehr genau einhalten. Weiterhin kann das Bohrgerät aber auch auf unterschiedliche Pflanzenabstände innerhalb einer Pflanzenreihe eingestellt werden.

Das erfindungsgemäße Bohrgerät zeichnet sich dadurch aus, daß es auch unter schwierigen Hangverhältnissen in im wesentlichen kontinuierlicher Arbeitsweise eingesetzt werden kann. Es ist nicht erforderlich, das Trägerfahrzeug für die einzelnen Bohrvorgänge gesondert abzustützen. Nach dem Bohren eines Satzes von Löchern wird lediglich der Träger des Bohrwerkzeuges angehoben und alsdann kann das Trägerfahrzeug sofort weiterfahren. Durch Anbringung des Bohrgerätes auf der Hangseite wird auch die Standsicherheit bzw. Kippstabilität des Fahrzeugs mit angebautem Bohrgerät erhöht. Aufgrund der günstigen Arbeitsweise läßt sich der Zeitaufwand für die maschinelle Anlegung von Pflanzungen auf weniger als die Hälfte reduzieren.

Die Unteransprüche betreffen vorteilhafte Ausgestaltungen und Weiterbildungen. Die verschiedenen Einstellmöglichkeiten sind vorzugsweise fernbedienbar, wobei jedoch auch die Anordnung von handverstellbaren Gewindespindeln für die Anschläge für die Neigungsstellung des Trägers für die Bohrwerkzeuge einfach, zuverlässig und kostensparend ist. Bei aufwendigerer Bauweise läßt sich jedoch die Neigungsstellung des Trägers mit den Bohrwerkzeugen auch mittels fernbedienbaren Motors verändern und fixieren. Besonders vorteilhaft ist auch die freie Nachführbarkeit der Neigungsstellung entsprechend dem Bohrfortschritt.

Von besonderem Vorteil ist auch der einstellbare Anschlag gemäß Anspruch 7, der mit dem beweglichen Teil des die Bohrwerkzeuge tragenden Trägers derart zusammenwirkt, daß bei eingefahrenem Träger automatisch eine Einstellung der Bohrwerkzeugachsen rechtwinklig zu der Teleskopgestängeachse und damit auf eine senkrechte Transportstellung erfolgt.

Zum Stande der Technik sei auch noch das DE-GM 1 956 466 erwähnt. Dieses betrifft ein mit der Dreipunkthydraulik von Schleppern kuppelbares Gerät zum Bohren von Pflanzlöchern. Dieses Bohrgerät ist also zum Anbau an einen herkömmlichen Traktor bestimmt, der jedoch nur bedingt geländegängig ist und sich nicht zum Ein_satz an solch steilen Böschungen eignet, wie er von kleinen Raupenkettenfahrzeugen befahrbar ist. Auch ist dieses bekannte Bohrgerät für eine Anbringung in bestimmten, festem Abstand von der Rückseite des Trägerfahrzeuges vorgesehen, so daß die Anpaßbarkeit an unterschiedliche Geländegegebenheiten begrenzt ist.

Weitere Vorteile und Ausgestaltungsmerkmale der Erfindung ergeben sich aus den übrigen Unteransprüchen und der nachfolgenden Beschreibung eines Ausführungsbeispiels der Erfindung anhand zweier Zeichnungen.

Fig. 1 zeigt schematisch ein zur Anbringung an einem Trägerfahrzeug ausgestaltetes Anbauaggregat mit einer Bohrwerkzeuganordnung zur Herstellung von Pflanzlöchern.

Fig. 2 zeigt eine schematische Draufsicht auf die Anordnung nach Fig. 1 samt einem schematisch angedeuteten Raupenketten-Trägerfahrzeug.

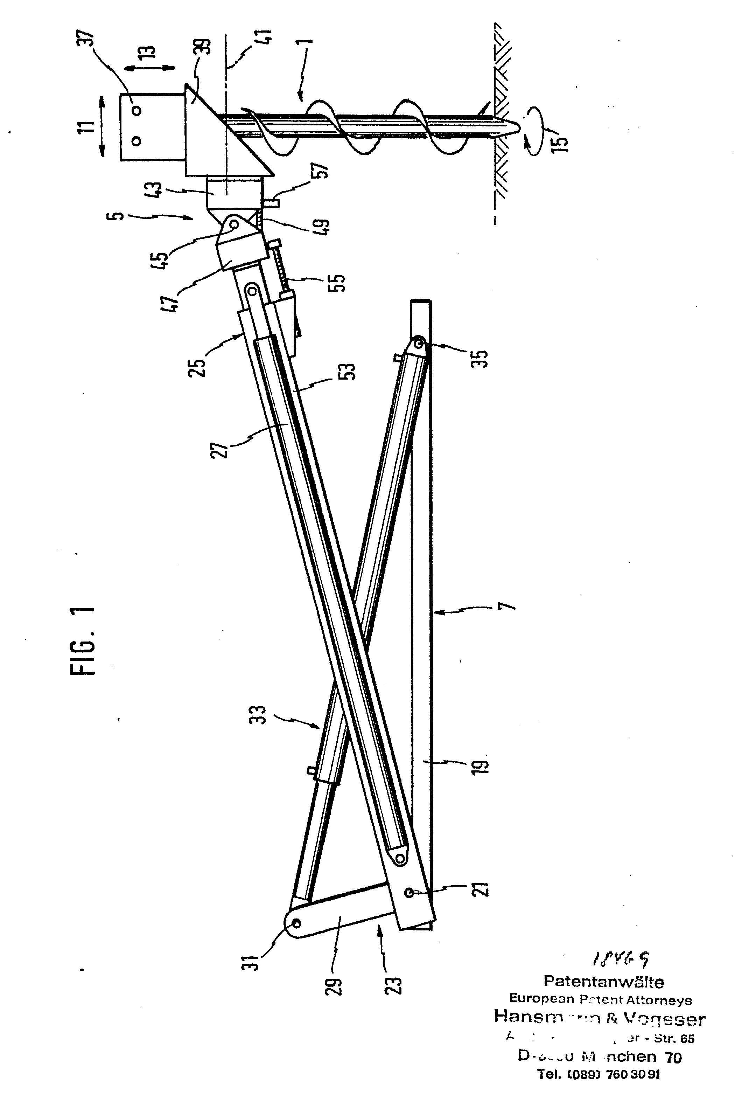

Fig. 1 zeigt bei 1 ein Bohrwerkzeug in Form eines großen Spiralbohrers von beispielsweise 35 cm Durchmesser, wie er zur Herstellung von Pflanzlöchern in einem Gelände dient.

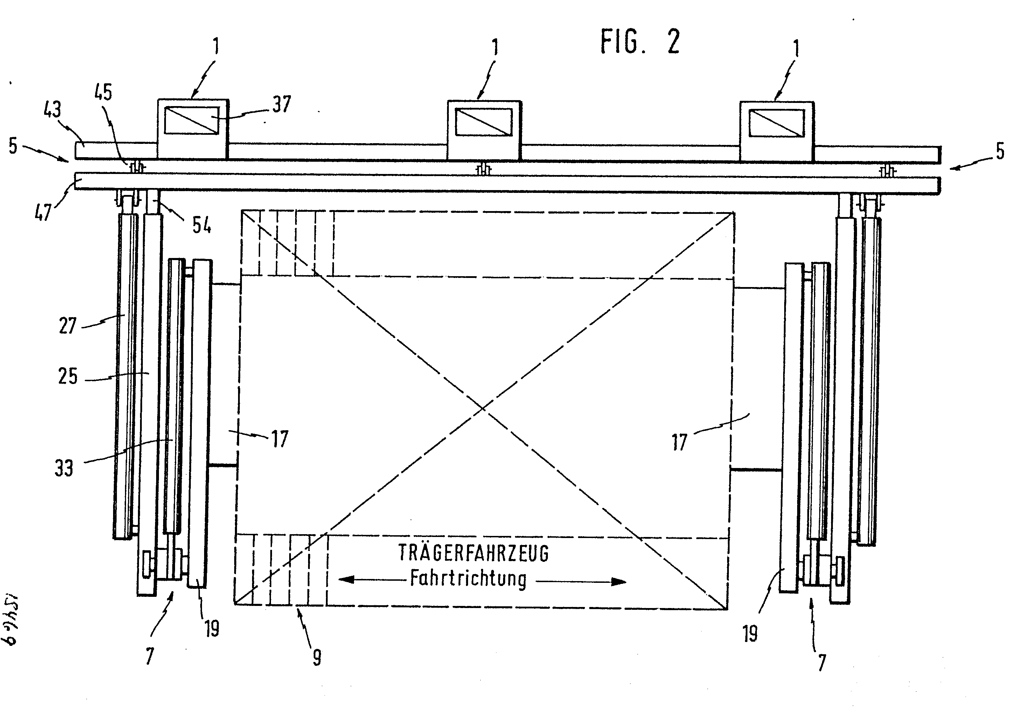

Mehrere solche Bohrwerkzeuge 1 können gemäß Fig. 2 in Abständen von beispielsweise 0,30 bis 2,50 m an einem Träger 5 angebracht sein, der in noch näher zu beschreibender Weise eine Neigungseinstellung der Bohrwerkzeuge gegenüber dem Gelände 3 gestattet und seinerseits an einem Anbauaggregat 7 sitzt. Dabei ist das Anbauaggregat 7 in zwei im wesentlichen identischen Ausführungen an den beiden Enden des Trägers 5 vorgesehen, so daß der Träger 5 mit den Bohrwerkzeugen 1 seitlich des Trägerfahrzeugs gehalten werden kann. Bei dem Trägerfahrzeug handelt es sich beispielsweise um ein kleines Raupenkettenfahrzeug, wie es bereits als Trägerfahrzeug für maschinelle Mähgeräte u.dgl. erhältlich ist. Die Raupenketten und ihre Fahrtrichtung sind bei 9 schematisch angedeutet.

Jedes der beiden Anbauaggregate 7 ist in noch näher zu beschreibender Weise mit einer Hubvorrichtung versehen. Die Bohrwerkzeuge 1 können auf diese Weise sowohl in ihrer Neigungslage gegenüber dem Boden (und auch dem Trägerfahrzeug) geändert werden als auch auf- und abgesenkt und schließlich auch seitlich gegenüber dem Trägerfahrzeug aus- und eingefahren werden. Das ist durch die Pfeile 11, 13 und 15 angedeutet.

Die Anbauelemente, mit denen das Bohrgerät an der Vorder- und Rückseite des Trägerfahrzeuges angebracht ist, umfassen jeweils eine Anbauplatte 17 und einen daran befestigten Anbauträger 19, die beide feste Lage gegenüber dem Trägerfahrzeug einnehmen.

An dem von der Bohrwerkzeuganordnung abgekehrten Ende weist der Anbauträger 19 ein Gelenk 21 auf, mittels dessen an ihm ein Winkelhebel 23 sitzt. Der lange Teil dieses Winkelhebels wird von einem ein- und ausfahrbaren Teleskopgestänge 25 mit daran angebrachtem Hydraulikzylinder gebildet, und der kurze Teil des Winkelhebels wird von einem Winkelhebelfortsatz 29 gebildet. Am oberen Ende dieses Winkelhebelfortsatzes ist mittels des Gelenks 31 ein Hydraulikzylinder 33 angelenkt, dessen anderes Ende mittels des Gelenks 35 wiederum an dem Anbauträger 19 befestigt ist, und zwar am anderen Ende wie der Winkelhebel 23.

Das Anbauaggregat stellt somit eine Art Scherenkonstruktion dar. Wird der Hydraulikzylinder 33 betätigt, dann wird das Teleskopgestänge 25 und damit die Bohrwerkzeuganordnung 1 auf- und ab-bewegt. Wird wiederum der Hydraulikzylinder 27 betätigt, so läßt sich damit die Bohrwerkzeuganordnung 1 seitlich aus- und einfahren, also beispielsweise an den Abstand von Pflanzreihen anpassen.

Am äußeren Ende des ausfahrbaren Teleskopgestänges sitzt der bereits erwähnte Träger 5, an dem wiederum die Bohrwerkzeuge 1 mit samt ihrem hydraulischen Antriebsmotor 37 und einer Antriebsmotoraufnahme 39 angebaut sind. Im Bedarfsfalle kann jedes Bohrwerkzeug an dem Träger 5 zur Erhöhung der universellen Einstellbarkeit auch noch um eine Achse 41 schwenkbar sein und zur Anpassung an unterschiedliche Reihenabstände auch auf dem Träger verschiebbar.

Der die Bohrwerkzeuge 1 tragende Träger 5 besteht aus zwei Teilen, deren äußerer die Bohrwerkzeuge 1 trägt und als langes Rohrprofil 43 ausgebildet ist. Dieses Rohrprofil 43 ist über Gelenke 45 mit einem länglichen Rohrprofil 47 verbunden, welches den inneren Teil des Trägers 5 bildet. Auf diese Weise können die von den beiden länglichen Rohrprofilen 43 und 47 gebildeten Teile des Trägers 5 in ihrer Neigungslage gegeneinander verstellt werden, um so die Neigungslage der Bohrwerkzeuge 1 gegenüber den Trägeraggregaten 7 zu verstellen.

Um diese Neigungslage auf einen Mindestwinkel zu fixieren, ist zwischen den beiden länglichen Rohrprofilen 43 und 47 eine in Fig. 1 nur schematisch angedeutete Gewindespindel 49 vorgesehen, die derart aus- und einschraubbar ist, daß sie den Neigungswinkel zwischen den beiden Teilen begrenzt. Dabei ist die Gewindespindel 49 mit dem einen der länglichen Rohrprofile 43 fest verbunden, während sie mit dem anderen dieser Rohrprofile 47 nur in Stoßverbindung steht. Das bedeutet, daß die Bohrwerkzeuge 1 zur Seite hin frei angehoben werden können, nach innen hin in ihrer Neigungsstellung aber durch die Stoßverbindung der Gewindespindel 49 mit dem einen langgestreckten Trägerrohr begrenzt sind.

Die freie Anhebbarkeit der Bohrwerkzeuge 1 ist vorgesehen, damit sich beim fortschreitenden Bohrvorgang der Winkel zwischen den beiden Rohrprofilen 43 und 47 des Trägers 5 ungehindert anpassen kann. An dem stationären Teil 53 des Teleskopgestänges 25 ist auch verstellbar eine weitere Gewindespindel 55 angebracht. Diese Gewindespindel 55 tritt mit ihrem äußeren freien Ende bei eingefahrenem Teleskopgestänge 25 in Stoßverbindung mit einem Ansatz 57 des äußeren Rohrprofils 43 des Trägers 5. Die Anordnung ist so getroffen, daß bei vollständig eingefahrenem Teleskopgestänge 25 die Gewindespindel 55 gerade am Anschlag 57 anstößt und die Bohrwerkzeuge 1 mit ihren Achsen rechtwinkelig zum Teleskopgestänge 25 einstellt. Befindet sich das Teleskopgestänge 25 im eingefahrenen Zustand in der angehobenen Lage, dann hängen also die Bohrwerkzeuge 25 rechtwinklig zum Teleskopgestänge, wenn die Gewindespindel 55 und der Anschlag 57 aneinander anstoßen. Damit wird verhindert, daß etwa die Bohrwerkzeuge beim Transport nach unten in das Trägerfahrzeug hineinhängen.

Mit dem vorbeschriebenen, an ein Trägerfahrzeug angebauten Bohrgerät läßt sich unwegsames Gelände sowohl die Hangneigung hinauf als auch längs des Hanges befahren. Wird der Hang längs befahren, lassen sich die Bohrwerkzeuge in ihrer Neigung ohne Schwierigkeiten so einstellen, daß die Pflanzlöcher trotz der Hangneigung vertikal gebohrt werden. Die Ausfahrbarkeit des Teleskopgestänges 25 mitsamt der Bohrwerkzeuganordnung 1 sorgt für genügenden Abstand zwischen dem Trägerfahrzeug und den Bohrwerkzeugen, so daß diese auch bei steiler Neigungseinstellung gegenüber dem Trägerfahrzeug nicht mit diesem kollidieren.

Die Neigungsverstellbarkeit der Bohrwerkzeuge durch Neigungsverstellung der Rohrprofile 43 und 47 gegeneinander gestattet es auch, die Neigungseinstellung mehrerer Bohrwerkzeuge zugleich mit einem einzigen Einstellvorgang zu ändern.

Dennoch kann es erwünscht sein, unter besonderen Geländeverhältnissen auch eine Einzelverstellung der Bohrwerkzeuge um eine andere Achse vorzunehmen, und in diesem Falle wird auch eine Verstellbarkeit um die Achse 41 vorgesehen.

Die Erfindung kann auch in mannigfacher Weise abgewandelt werden. Die durch die Gewindespindeln 49 und 55 gegebenen Stellelemente und Anschlagelemente lassen sich auch als fernsteuerbare Hydraulikzylinder oder andere Maschinenelemente ausführen. Wenn auch die dargestellte Ausführungsform mit einem durchgehenden Träger 5 besonders einfachen Aufbau bedingt, so können auch in dieser Hinsicht andere Konstruktionsmerkmale mit Einzelanbau der Bohrwerkzeuge und dgl. vorgesehen sein.

PATENTANSPRÜCHE:

1. Bohrgerät zur Herstellung von Bodenlöchern für Pflanzungen oder dgl. mit einem oder mehreren an einem Träger sitzenden, heb- und senkbaren, angetriebenen Bohrwerkzeugen in Form einer drehbaren Spindel o.dgl. mit gegenüber dem Boden einstellbarer Neigungsstellung, wobei das Bohrgerät an ein Trägerfahrzeug anbaubar ist, d a d u r c h  g e k e n n - z e i c h n e t , daß der Träger (5) der Bohrwerkzeuge (1) seitlich parallel zu sich selbst ver- s etz-bar ist und daß die Bohrer (1) mit ihren Antrieben (37) auf dem Träger (43) zur Einstellung unterschiedlicher Lochabstände längsverschieblich angeordnet sind.

2. Bohrgerät nach Anspruch 1, d a d u r c h  g e k e n n z e i c h n e t, daß der Träger (5) für die Bohrwerkzeuge (1) eine langgestreckte Form aufweist und in Abständen die Bohrwerkzeuge (1) samt ihren Antriebsaggregaten (37) trägt.

3. Bohrgerät nach Anspruch 1 oder 2, d a d u r ch  g e k e n n z e i c h n e t,  daß der langgestreckte Träger aus zwei zueinander parallel verlaufenden Teilen besteht (43, 47), die durch zwischengeschaltete Gelenke (45) in ihrer Winkellage zueinander verstellbar sind.

4. Bohrgerät nach Anspruch 3, d a d u r c h  g e k e n n z e i c h n e t, daß die gegenseitige Winkellage zwischen den beiden Teilen (43, 47) des Trägers (5) durch ein Stellelement (49) auf einen Mindestwinkel begrenzbar, aber entsprechend dem Bohrfortschritt frei nachführbar ist.

5. Bohrgerät nach Anspruch 4, d a d u r c h  g e k e n n z e i c h n e t,  daß der langgestreckte

Träger von zwei Rohren (43, 47) gebildet wird, zwischen denen sich eine verstellbare Gewindespindel (49) als Anschlag für die eingestellte Winkellage befindet, wobei die Gewindespindel mit dem einen Rohr (43) fest verbunden ist, und mit dem anderen Rohr (47) in Stoßverbindung steht.

6.    Bohrgerät nach irgendeinem der Ansprüche 1 bis 5, d a d u r c h   g e k e n n z e i c h n e t, daß das den Träger (5) für die Bohrwerkzeuge haltende  Anbauaggregat wenigstens ein Teleskopgestänge (25) zur Parallelverschiebung des die Bohrwerkzeuge neigungseinstellbar tragende Träger aufweist.

7.    Bohrgerät nach Anspruch 6, d a d u r c h   g e k e n n z e i c h n e t,   daß das Teleskopgestänge an seinem ortsfesten Teil (53) einen einstellbaren Anschlag (Spindel 55) aufweist, der bei eingefahrenem Zustand des beweglichen Teils (54) des Teleskopgestänges in Stoßverbindung (Teil 57) mit dem die Bohrwerkzeuganordnung tragenden Teil (43) des Trägers (5) tritt, derart, daß die Bohrwerkzeugachsen eine definierte Winkellage, vorzugsweise rechtwinklig gegenüber dem Teleskopgestänge (25), einnehmen.

8.    Bohrgerät nach irgendeinem der Ansprüche 1 bis 7, d a d u r c h   g e k e n n z e i c h n e t ,   daß das Teleskopgestänge (25) samt der davon getragenen Bohrwerkzeuganordnung gegenüber einem zum Anbau an dem Trägerfahrzeug dienenden Anbauelement (19) heb- und senkbar und in der gewählten Höhenstellung feststellbar angebracht ist.

9.    Bohrgerät nach Anspruch 8, d a d u r c h   g e k e n n z e i c h n e t ,   daß nahe jedem Ende des die Bohrwerkzeuganordnung tragenden Trägers (5) ein Anbauelement (19) und ein Teleskopgestänge (53,54)
in Parallelanordnung zueinander vorgesehen sind,
wobei der Abstand zwischen den beiden Anbauelementen
der Länge eines Trägerfahrzeugs entspricht und die
Teleskopgestänge (25) für eine Anordnung der Bohrwerkzeuge seitlich vom Trägerfahrzeug ausgelegt sind.

10.    Bohrgerät nach Anspruch 9, d a d u r c h
g e k e n n z e i c h n e t,    daß die Anbauelemente
mit der Vorder- und Rückseite eines Trägerfahrzeugs,
insbesondere Raupenkettenfahrzeugs (9) zusammengebaut
sind.

11.    Bohrgerät nach irgendeinem der Ansprüche 7
bis 10, d a d u r c h  g e k e n n z e i c h n e t,
daß das den Träger tragende Teleskopgestänge (25)
für die Aus- und Einfahrbewegung einen Hydraulikzylinder (27) aufweist, und an seinem von der
Bohrwerkzeuganordnung abgekehrten, an dem Anbauelement angelenkten Ende einen Winkelhebelfortsatz
(29) hat, an dem ein weiterer Hydraulikzylinder (33)
zum Heben und Senken der Bohrwerkzeuganordnung angreift.

12.    Bohrgerät nach irgendeinem der Ansprüche 1 bis
11, d a d u r c h  g e k e n n z e i c h n e t, daß
die einzelnen Bohrwerkzeuge auch um eine senkrecht
zur Längsachse des Trägers (5, 17) verlaufende Achse
(41) neigungsverstellbar sind.

13.    Bohrgerät nach irgendeinem der Ansprüche 1
bis 12, d a d u r c h  g e k e n n z e i c h n e t,
daß die Antriebsmotoren (37) der Bohrwerkzeuge die
Hydraulikzylinder (27, 33) zur Verstellung des Trägers
(5) und die Stellvorrichtung (55, 57) für die
Neigungseinstellung der Bohrwerkzeuge (1) gegenüber
dem Anbauaggregat fernbedienbar sind.

FIG. 1

18469
Patentanwälte
European Patent Attorneys
Hansmann & Vorsser
... er - Str. 65
D-8000 München 70
Tel. (089) 760 30 91

# FIG. 2

TRÄGERFAHRZEUG
Fahrtrichtung

Hauser mann & Vossar
European Patent Attorneys
Patentanwälte
Albert · Roßhaupter · Str. 65
D-8000 M nchen 70
Tel. (089) 760 3091

0092800

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 247 875  (CAVAILLE)<br><br>* Seite  4, Zeilen 16-40; Seiten 5-10; Abbildungen 1-7 * | 1-4,6, 8-10, 12,13 | A 01 C   5/04<br>E 04 H  17/26 |
| A | FR-A-2 206 660  (CAVAILLE)<br>* Seite 1, Zeilen 29-40; Seite 2; Abbildungen 1,2 * | 1,2 | |
| D,A | DE-B-2 553 183  (KROHN)<br><br>* Spalte 4; Spalte 5; Abbildungen 1-3 * | 1,2,6, 8,11, 12 | |

RECHERCHIERTE SACHGEBIETE (Int. Cl. ³)

A 01 C
E 04 H

Der vorliegende Recherchenbericht wurde für alle Patentansprüche erstellt.

| Recherchenort<br>DEN HAAG | Abschlußdatum der Recherche<br>26-07-1983 | Prüfer<br>VERMANDER R.H. |
|---|---|---|